# EUROPEAN PATENT SPECIFICATION

(11) **EP 3 146 853 B1**
(45) Date of publication and mention of the grant of the patent: **20.11.2019**
(21) Application number: 15796425.5
(22) Date of filing: 18.05.2015
(51) Int. Cl.: A23K 10/00, A23K 50/30, A23K 50/20, A23K 40/25

(54) **PET FOOD CAPABLE OF REMOVING DENTAL CALCULUS AND PLAQUE AND METHOD FOR MANUFACTURING SAME**
HAUSTIERFUTTER MIT FUNKTION ZUR ENTFERNUNG VON ZAHNSTEIN UND ZAHNBELAG UND VERFAHREN ZUR HERSTELLUNG DAVON
ALIMENT POUR ANIMAUX DOMESTIQUES, APTE À ÉLIMINER LE TARTRE ET LA PLAQUE DENTAIRES ET SON PROCÉDÉ DE FABRICATION

(30) Priority: 19.05.2014 KR 20140059920
(43) Date of publication of application: 29.03.2017
(73) Proprietor: Forcans Inc., Anseong-si, Gyeonggi-do 456-380 (KR)
(72) Inventor: KOO, Bon Gil, Anseong-si Gyeonggi-do 456-380 (KR)
(74) Representative: Mathys & Squire
(86) International application number: PCT/KR2015/004960
(87) International publication number: WO 2015/178641

(56) References cited:
- WO-A1-2015/067761
- CN-A- 102 835 321
- JP-A- 2012 034 675
- JP-A- 2012 034 675
- JP-A- 2014 008 045
- KR-B1- 101 009 987
- US-A1- 2007 116 798
- US-A1- 2013 189 397
- US-A1- 2013 189 397
- US-A1- 2013 273 125

## Description

### Technical Field

The present invention relates to a pet food capable of removing dental calculus and plaque, and a method of manufacturing the same.

### Background Art

Recently, in addition to feeding, interest in the healthcare of pets has increased in accordance with a continuous increase in the number of persons keeping pets. However, it is very cumbersome to periodically and continuously feed pets, and accordingly, pet foods have been developed so as to have shapes suitable for stimulating pets' curiosity to thus induce a masticatory action. Further, as the number of people who travel increases, pet owners frequently bring pets along when traveling or camping. Accordingly, there is a demand for simple meal substitution foods for pets.

With regard thereto, US Patent No. 2008-0314333 suggests a bone-shaped structure including an elastic elastomer material, which interests dogs, among pets, so as to satisfy the aforementioned requirements. A food receiving unit is formed in the body of the bone-shaped structure, and edible pet foods are inserted into the food receiving unit, so that a pet's interest in the bone-shaped structure is increased to thus allow the pets to eat while playing.

However, the bone-shaped structure includes the elastic elastomer material, which is not edible. Accordingly, there are problems in that the bone-shaped structure must be kept clean when reused, and that the pet may be endangered, that is, the pet may have indigestion or may be killed, if the bone-shaped structure is broken into small pieces by the sharp teeth of the pet and the pet swallows the pieces.

Further, it is very important in terms of health care to remove dental calculus covering the teeth after the masticatory action of the pet, but this is not considered in the aforementioned patent document.

Plaque discolors all of the teeth of the pet, and accumulates and hardens to form dental calculus in the vicinity of the gums, thus spoiling the appearance of the teeth and causing gum diseases or, ultimately, the loss of teeth. Accordingly, a pet owner has to make efforts to care for the teeth and oral cavity of the pet, such as rinsing the mouth after feeding.

Therefore, teeth scaling is usually performed at a veterinary clinic in order to remove plaque and dental calculus. However, charges for such veterinary treatment are high, and the need has arisen to take care of pets' teeth more easily. Accordingly, solutions including a wide variety of chemical and biological medicines have been proposed in order to delay the formation of dental calculus, to remove formed dental calculus, or to reduce the amount of dental calculus that is formed.

US Publication No. 2013/0273125 A1 discloses chewable articles intended to be provided to animals for purposes including dental cleaning, breath freshening, nutrition, administration to the animal of beneficial agents, satisfaction of the animal's urge to chew, and general enjoyment by the animal. The chews are made to be appetizing to the animal, to satisfy an urge to chew, to effect abrasive cleaning to the oral cavity of the animal, or a combination of these. The chews have a resilient, chewable texture and are shaped to facilitate dental cleaning, to facilitate oral grasping by the animal, to appeal to human owners of the animal, to enhance the human-animal bond, or a combination of these. Also disclosed are apparatus and methods for making such chewable articles and for formulating and using them to effect dental health in animals.

US Publication No. 2013/189397 A1 discloses a pet food product with multiple layers and at least one of the layers includes protrusions that extend into another layer. The protrusions provide a mechanical interlock between layers providing increased resistance to delamination while the pet food product is being masticated. One of the layers may primarily provide palatability while another layer may provide therapy such as dental cleaning. The ability to resist delamination during mastication may result in prolonged delivery of the therapy as the pet chews on the pet food product to experience the palatability of the palatable layer.

US Publication No. 2007/0116768 A1 discloses emulsion impregnated rawhide pet chews. A wide range of aqueous based soaking operations can be employed to impregnate substantially throughout various rawhide pet chews; suitable substances for release into the oral cavity of pets during chewing include emulsions, surfactants, conditioners, flavorants and/or active ingredients. Prior to impregnation, the rawhide chews are physically disrupted/penetrated to augment substance impregnation substantially throughout the chews.

International Publication No. WO 2015/067761 A1 discloses a method provided to manufacture cereal flakes with texture properties. The flakes have a porosity of 40-70%, a mean wall thickness of 100-180 microns, a thickness of 0.5-2 mm, a length of 2-8 mm and a liquid absorption index of 80-200 g liquid per 100 g flakes. The method involves cooking a dough in an extruder, cutting the extruded dough to obtain flakes and then drying the flakes.

Chinese Publication No. 102835321 A discloses a pet toy for stimulation of pet's teeth.

Japanese Publication No. 2012-034675 A discloses a pet food having dental cleaning holes for pet's dental care. It discloses that through holes are provided in the pet food in a longitudinal direction and since the pet food is cut into round slices at predetermined interval in a longitudinal direction, dentifrice effect is acquired.

One of the solutions is to provide a hard chewing gum to pets so as to mechanically remove the dental calculus and the plaque covering the teeth.

For example, Korean Patent No. 10-1009987, which was submitted by the applicant of the present invention and for which a patent was then granted, discloses a dental gum for removing plaque and dental calculus attached to pet's teeth in order to manufacture foods including bodies made of edible materials and to improve the health of pets' teeth, thereby reducing a pet owner's trouble to take care of the pet's teeth after feeding, given that the sanitary control of known foods including inedible materials is a high-maintenance and time-consuming job.

However, in the case of pets' teeth, the upper and lower jaws are different from each other and the tooth arrangement is irregular in front and rear parts, unlike human teeth. Accordingly, there is a demand for a structure which allows pets' teeth to be easily inserted into the holes therein and comes into contact with an entire tooth trunk, thereby removing the plaque and the dental calculus.

### Disclosure

### Technical Problem

Accordingly, the present invention has been made keeping in mind the above problems occurring in the related art, and an object of the present invention is to provide a pet food which is used for the purpose of a meal or meal substitution, easily removes plaque and dental calculus formed on a pet's tooth trunk having various sizes and shapes, and has a shape suitable for performing scaling.

### Technical Solution

Therefore, the present invention discloses at least the following aspects.
[1]. In order to accomplish the above object, the present invention provides a pet food capable of removing dental calculus and plaque, the pet food including a bar-type body extending in a longitudinal direction, said body including a plurality of throughholes transversely formed through the body and arranged along the longitudinal direction of the
   body wherein each through-hole includes a plurality of protrusion units which protrude toward a longitudinal central axis of the through-hole from the inner circumferential surface of the through-hole, or which protrude from the inner circumferential surface of the through-hole so as to form a helical ridge, such that during a masticatory action of the pet, a tooth trunk of a pet enters a through-hole and comes into contact with the inner circumferential surface of the through-hole and protusion units contact the outer circumferential surface of the tooth trunk.
[2]. In [1], a screw thread is longitudinally or transversely formed in the inner circumferential surface of each through-hole.
[3]. In [1], a screw thread is longitudinally or transversely formed in the inner circumferential surface of each through-hole and in lateral surfaces of the protrusion units extending from the inner circumferential surface.
[4]. In [1], the the protrusion units have a sectional shape of a circle, a polygon, or the leaves of a three-leaf clover.
[5]. In [1], a total sectional area of the upper and lower sides of the through-holes formed through the body is more than 40% of the total surface area of the upper and lower surfaces of the body before the through-holes are formed.
[6]. In [5], each through-hole has a sectional shape of a circle, a semi-circle, an oval, a polygon, a pentagram, a cogwheel, a dumbbell, or a cloud including two or more circles or ovals that partially overlap.
[7]. In [1], the body may include a humectant layer disposed beneath the coating layer.
[8]. In [1], one or more rows of through-holes are longitudinally and transversely arranged in the body.
[9]. In [8], said through-holes have a diameter and wherein a small-diameter through-hole, smaller than the diameter through-holes, is formed between the rows of the through-holes.
[10]. In order to accomplish the above object, the present invention also provides a method of manufacturing a pet food, the method including providing 100 wt% of a mixture including 30 to 70 wt% of a starch, 5 to 30 wt% of a sugar, and the balance of solvent mixed therein; molding the mixture so that the mixture has a bar-type body wherein a plurality of through-holes is transversely formed through the body and arranged along the longitudinal direction of the body, so that during a masticatory action of the pet a tooth trunk of a pet enters a through-hole and comes into contact with the inner circumferential surface of the through-hole; and forming protrusion units which protrude from the inner circumferential surface of each through-hole toward a longitudinal central axis of each through-hole, or which protrude from the inner circumferential surface of each through-hole so as to form a helical ridge, so that during a masticatory action of the pet, protusion units contact the outer circumferential surface of the tooth trunk.
[11]. In [10], the method further includes longitudinally or transversely forming a screw thread in the inner circumferential surface of the through-hole.
[12]. In [10], the method further includes applying a coating layer, a humectant layer, or both a coating layer and a humectant layer on the body.
[13]. In [10], the method further includes forming the through-holes having the same sectional shape or two or more different sectional shapes through the body.
[14]. In [10], the molding the mixture includes an injection-molding process.
[15]. In [10], the coating layer further includes a palatability enhancer, an antimicrobial agent, a flavoring agent, or a coloring agent.

### Advantageous Effects

According to a simple structural characteristic of a pet food of the present invention and a method of manufacturing the same, the contact area between the body of the pet food and a pet's tooth trunk is increased during the masticatory action of a pet eating the food or snack, thus performing scaling and easily removing dental calculus and plaque. Thereby, it is possible to easily maintain the health of the pet's teeth and gums.

Further, it is possible to save a pet owner's trouble in taking care of the teeth and gums of the pet.

### Description of Drawings

FIG. 1a is a perspective view of a pet food, through which through-holes are formed and which is used to remove dental calculus and plaque, as a reference example;
FIG. 1b is a sectional view of the pet food, which is taken along the line A-A' of FIG. 1a;
FIG. 1c is a sectional view of the pet food of FIG. 1a, which is covered with a humectant layer and then with a coating layer, according to another embodiment of the present invention;
FIG. 2a is a perspective view of a pet food, through which through-holes are formed and which includes screw threads longitudinally formed in the inner circumferential surfaces of the through-holes to remove dental calculus and plaque, according to an embodiment of the present invention;
FIG. 2b is a sectional view of the pet food, which is taken along the line B-B' of FIG. 2a;
FIG. 3a is a perspective view of a pet food, through which through-holes having the sectional shape of a cogwheel are formed to remove dental calculus and plaque, according to another embodiment of the present invention;
FIG. 3b is a sectional view of the pet food, which is taken along the line C-C' of FIG. 3a;
FIG. 4a is a plan view of a pet food including through-holes, which have a rectangular section and are formed in a 2×6 row arrangement, and four protrusion units, which protrude from the inner circumferential surface of each through-hole, according to another embodiment of the present invention;
FIG. 4b is a plan view of a pet food including through-holes, which have a circular section and are formed in a 2×6 row arrangement, five protrusion units, which protrude from the inner circumferential surface of each through-hole, and a small-diameter through-hole, which is formed between the rows, according to another embodiment of the present invention;
FIG. 4c is a plan view of a pet food, which has almost the same constitution as the pet food of FIG. 4b but which is different from that of FIG. 4b in that a 3×6 row constitution is adopted in FIG. 4c;
FIG. 4d is a plan view of a pet food including through-holes having various sectional shapes according to another embodiment of the present invention; and

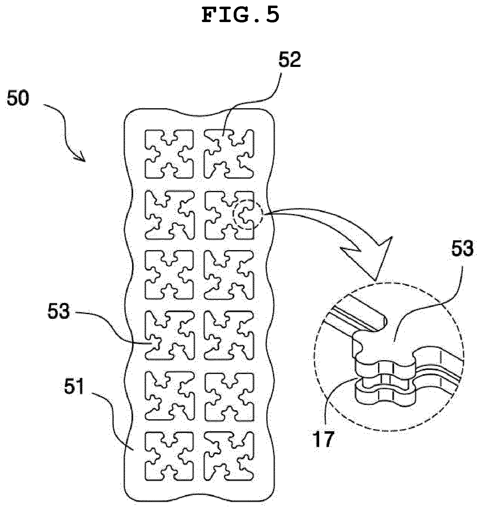

FIG. 5 is a plan view of a pet food capable of removing dental calculus and plaque according to another embodiment of the present invention, the pet food including through-holes having a rectangular section, protrusion units, which have the sectional shape of a three-leaf clover, which protrude toward the longitudinal central axis of the through-hole from the inner circumferential surface of the through-hole having the rectangular section or which obliquely protrude from the inner circumferential surface, and a groove, which is formed in the lateral surface of the protrusion unit and which is enlarged in a perspective view indicated by a dotted circle.

### Mode for Invention

The present invention will be described below in greater detail with reference to the drawings. The drawings are provided to illustrate particularly preferable embodiments of the present invention, and the present invention should not be construed as limited to the embodiments shown therein.

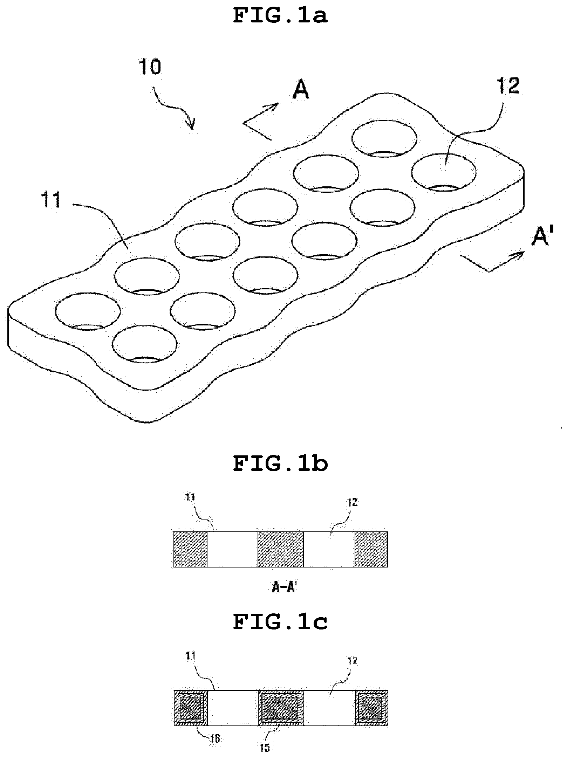

FIG. 1a is a perspective view of a pet food 10as a reference example. The food 10 has a bar-type body 11, and one or more through-holes 12 are formed through the body. Food according to an embodiment of the present invention has a hardness of 15 to 50 A (measured by a durometer). The through-holes are formed through upper and lower sides of the body so that the teeth of a pet are easily inserted into the through-holes during the masticatory action of the pet, thus enabling the trunk of the tooth to come into physical contact with the inner circumferential surface of the through-hole. In the invention described herein, each through-hole includes a plurality of protrusion units which protrude toward a longitudinal central axis of the through-hole from the inner circumferential surface of the through-hole, or which protrude from the inner circumferential surface of the through-hole so as to form a helical ridge. Accordingly, dental calculus and plaque may be removed only through the masticatory action of the pet, thereby preventing diseases of the teeth, gums, and/or mouth and ultimately maintaining the pet's health in good condition.

The body 11 according to the embodiment of the present invention includes 100 wt% of a mixture including 30 to 70 wt% of starch, 5 to 30 wt% of sugar, and the balance of solvent mixed therein, and has a water content of 10 to 14% so as to come into contact with the teeth with a predetermined contact force.

The starch according to the embodiment of the present invention may be obtained from one or more selected from corn, potato, sweet potato, tapioca, wheat, gluten, rice, oat, soybean, and barley. However, when the amount of starch that is used is less than 30 wt%, binding force may be too weak to provide physical contact force, and when the amount is more than 70 wt%, binding force and hardness may be slightly high, thus injuring the teeth or gums.

The sugar according to the embodiment of the present invention provides appropriate binding force, molding stability, and sweetness to the body of the food, and the sweetness may be used to enhance the digestibility in an intestinal digestive system. Further, the sugar includes one or more selected from isomalto-oligosaccharides, fructo-oligosaccharides, galacto-oligosaccharides, soy-oligosaccharides, maltitol, sorbitol, mannitol, lactitol, erythritol, and maltooligosaccharides. When the sugar is used in a content of less than 5 wt%, the molding binding force and the molding stability bonding of the body 11 are reduced, and when the content is more than 30 wt%, the water content is increased, thus reducing the hardness.

In consideration of this, the components according to the embodiment of the present invention may be mixed well with the solvent and then molded to manufacture a molded article (that is, the body) having a predetermined shape. Heating using hot wind at 30 to 90°C and cooling may be appropriately repeated until a predetermined hardness is obtained, whereby the molded article is dried. A natural drying process may be adopted if necessary. The hardness of the body that is manufactured according to the aforementioned procedure is preferably 15 to 50 A so as to remove the dental calculus and the plaque and to maintain bendability, elasticity, and rigidity.

When the hardness of the molded article is less than 15 A, the physical frictional force applied to the teeth is too weak to effectively remove the plaque and the dental calculus. When the hardness is more than 50 A, the molded article may be excessively hardened and thus negatively affect the teeth and digestion and/or injure the teeth or gums.

Examples of other optional components may include one or more humectants selected from the group consisting of palm oil, olive oil, soybean oil, corn oil, rapeseed oil, rice kernel oil, grapeseed oil, sunflower oil, hydrogenated palm kernel oil, propylene glycol, glycerin, aloe vera, sorbitol, and glucose. The optional component is used to impart better elasticity and flexibility to the body of the present invention so that the body is not easily broken and the tissue thereof is made soft, and is also used to improve the moisturizing ability and the intestinal digestibility.

Further, in order to improve the palatability and the functionality of the pet food of the present invention, one or more additives of a palatability enhancer, a dental calculus remover, a nutrient, a binder, and an antimicrobial agent may be used to manufacture the body so that the additive is included in the body within the content range applicable to the related art.

Examples of the palatability enhancer may include beef, pork, mutton, poultry, egg yolk, whole egg, egg white, MDCM (mechanically deboned chicken meat), or a combination thereof, but are not limited thereto.

Further, examples of the dental calculus remover for helping dental calculus removal, dental deposition prevention, and relief of inflammatory disorders may include zinc salts or phosphates. Examples of the zinc salts include zinc nitrates, zinc sulfates, zinc citrates, zinc chlorides, zinc acetates, or zinc gluconates, and examples of the phosphates include polyphosphates such as pyrophosphates, tripolyphosphates, hexametaphosphates, and combinations thereof. One or more of the aforementioned examples may be selected and used.

According to the embodiment of the invention, vitamins, such as B-group vitamins, and nutrient components, such as calcium gluconates, may be added so as to provide nutrients to the teeth and the oral mucosa. One or more of grapefruit seed extract, acetic acid, dibenzoyl thiamine, lactic acid, malic acid, adipic acid, phytic acid, chito-oligosaccharides, chitosan, and green tea extract, or a compound including two or more thereof may be used for the purpose of achieving anti-inflammatory and antibacterial actions.

One or more may be selected from among gelatine, xanthan gum, sodium carboxymethyl cellulose, carrageenan, agar, alginic acid, and methyl cellulose to be used as the binder component. An edible coloring agent or an edible flavoring agent may be added so as to improve the appearance and flavor of the final product.

Preferably, the total sectional area of the upper and lower sides of the through-holes 12 formed through the molded body 11 is more than 40% of the total surface area of the upper and lower surfaces of the body 11 (that is, the surface area before the through-holes are formed) so that various shapes of pets' teeth, which protrude irregularly, are capable of being inserted into the through-holes. Accordingly, the through-holes 11 may be formed through the upper and lower parts of the body 11, for example, in an arrangement of 2×6, 3×6, 3×5, or 2×7 rows. The intervals between the through-holes constituting the rows may be the same or different, and the through-holes may be formed at regular or irregular intervals. A small-diameter through-hole smaller than the through-hole 12 may be formed between the rows.

FIG. 1a shows a through-hole 12 having a circular section. However, the sectional shape may be a polygon, an oval, a semi-circle, a pentagram, a cogwheel, a three-leaf clover, or a cloud (a shape including two or more circles or ovals that partially overlap) in order to increase the scaling, dental calculus, and plaque removal efficiency.

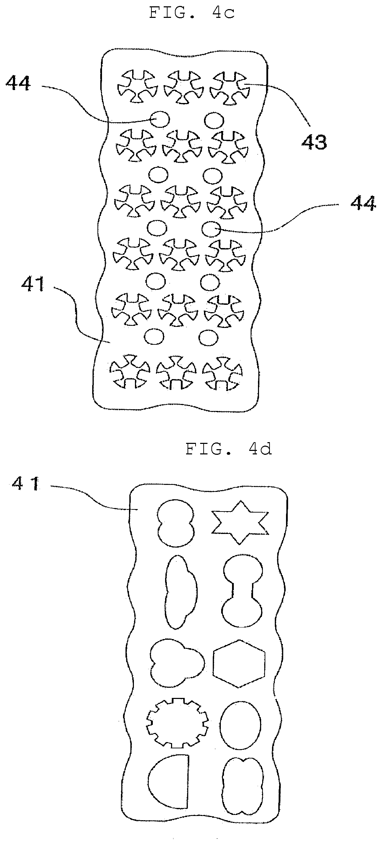

Further, through-holes having only one sectional shape among the aforementioned sectional shapes may be formed through the body 11. However, in some cases, as shown in FIG. 4d, thorough-holes having two or more different sectional shapes may be formed through the body. From FIG. 4d, it can be seen that the protrusion units protruding from the inner circumferential surface of the through-hole are omitted in order to clarify the drawing.

A typical pet food inevitably breaks down and ages upon long-term storage. Accordingly, a coating solution and/or a humectant may be applied on the external surface of the body of the food (FIG. 1c) so as to increase the shelf life of the pet food, to protect effective nutrient components, and to provide predetermined contact force (frictional force) when the teeth come into contact with the body. The humectant may be mixed with the material of the body in advance so as to simplify the process.

The coating solution includes 3 to 20 wt% of a coating agent and a solvent (preferably water). Examples of the coating agent that is used may include one or more selected from gelatin, xanthan gum, sodium carboxymethyl cellulose, carrageenan, agar, alginic acid, and methyl cellulose. Gelatin, when used as the coating agent, is a low-calorie food material and is a protein made by the partial hydrolysis of collagen, which is the protein of animal connective tissue. The coating agent is powder having a smell and taste similar to those of the juices that come from meat, and is used to perform surface coating, thus preventing various foods from absorbing water and also from drying. When the amount (dilution amount) of the coating agent that is used is less than 0.5 wt%, the coating solution is very dilute, thus excessively increasing the coating time. When the amount is more than 20 wt%, since the concentration of the coating solution is very high, the distribution of the coating solution is not uniform on the coated surface, the workability becomes poor, and the quality of the product is reduced due to hardening of the coating solution.

Examples of the coating method according to the embodiment of the present invention may include a spray method and a dipping method. With regard to the spray method, the coating solution is constantly sprayed through a nozzle, and there is a merit in that the surface is thinly, constantly, and uniformly coated. As for the dipping method, the coating solution penetrates the product to perform coating, unlike coating of only the surface. The dipping method has a merit in that the physical properties of the surface are improved, and is preferably applied when the coating thickness does not need to be precisely controlled or when the surface is irregular. In the dipping method, the compositional ratio of the coating agent and the amount of the coating agent that penetrates the product must be considered, and the body is dipped in the coating solution for a predetermined amount of time, passes through several conveyor belts, and is subjected to a surface-drying process.

Meanwhile, when the humectant is not added during molding of the body but is used to coat the molded body, it is typically preferable to apply the coating layer on the humectant layer.

The method of manufacturing a pet food according to the embodiment of the present invention may include providing 100 wt% of a mixture including 30 to 70 wt% of starch, 5 to 30 wt% of sugar, and the balance of solvent mixed therein, and molding the mixture into a molded article such as the pet food of claim 1.

The molding step may include an injection-molding process for injecting the mixture constituting the body into a mold to mold the mixture into the body having a predetermined shape, and those skilled in the art may select an appropriate molding process as required.

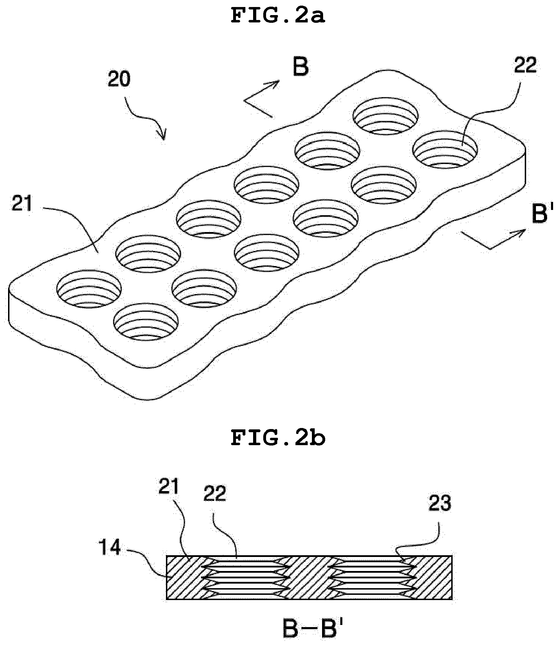

Hereinafter, a description of constitutions the same as those shown in FIG. 1a will be omitted. Further, for example, from FIGS. 2a to 5, it can be seen that a screw thread, the coating layer, and the humectant layer are omitted to thus further clarify the drawings.

FIG. 2a is a view showing a pet food 20 according to an embodiment of the present invention. Through-holes 22 in the pet food 20 are formed in the same arrangement as the through-holes 12 of FIG. 1a, that is, in a 2×6 row arrangement. However, the through-holes 22 are different from the through-holes 12 of FIG. 1a in that protrusion units 23 protrude from the inner circumferential surfaces of the through-holes 22.

Preferably, the protrusion units 23 protruding from the inner circumferential surface transversely form screw threads in the body 21 of the pet food; in other words, a plurality of protrusion units is formed to be arranged parallel to each other in the depth direction of the body, so that the protrusion units 23 easily come into physical contact with the teeth when a pet's teeth are inserted into the through-holes, and so that the protrusion units 23 are sequentially broken when a contact pressure equal to or greater than a predetermined value is applied by the teeth or the gums. This constitution is shown in greater detail in FIG. 2b, and FIG. 2b shows the protrusion unit 23 having a triangular section. However, the sectional shape of the protrusion unit may be a trapezoid (not shown in the drawing) so as to more easily perform scaling using surface contact with the teeth and to more easily remove the dental calculus and plaque.

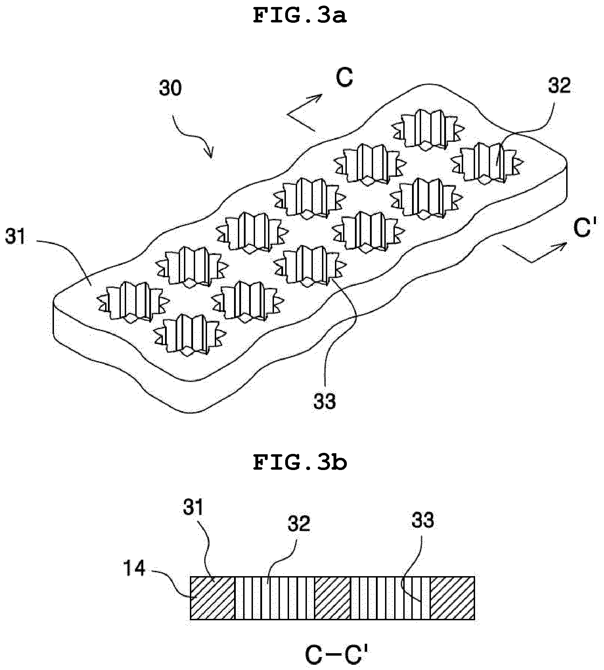

FIG. 3a shows another embodiment in which protrusions are longitudinally extended in a through-hole 32, unlike the constitution including the protrusion units 23 arranged parallel to each other in the depth direction of the body in FIG. 2a. The through-hole 32 in the body 31 has the sectional shape of a cogwheel, and the teeth of the cogwheel may correspond to protrusion units 33 that come into contact with the pet's teeth to thus remove the dental calculus and the plaque. The protrusion units 33 protrude from the inner circumferential surface of the through-hole 32 to easily remove the dental calculus and the plaque from the left and right sides as well as the front and rear sides of the tooth, that is, the entire outer circumferential surface of the tooth, when the tooth is inserted.

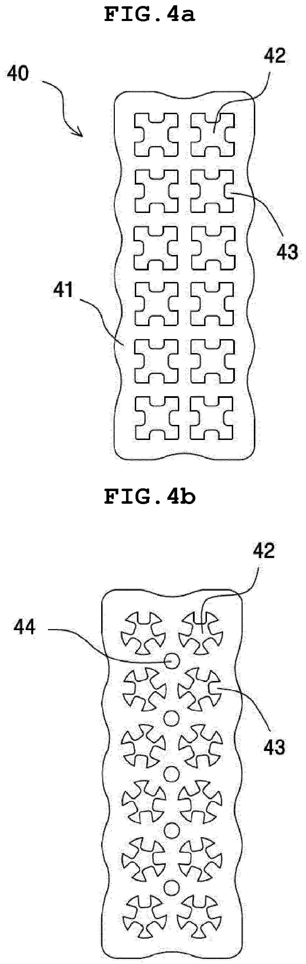

In FIG. 4a, the sectional shape of the through-hole 42 is a rectangle, and the through-holes are formed in a 2×6 row arrangement. Four protrusion units 43 protrude toward the longitudinal central axis of the through-hole from the inner circumferential surface of each through-hole 42 having the rectangular section. In FIG. 4b, the sectional shape of the through-hole 42 is a circle, and the through-holes are formed in a 2×6 row arrangement. The five protrusion units 43 protrude toward the longitudinal central axis of the through-hole from the inner circumferential surface of each through-hole 42, which has a circular section. The small-diameter through-hole 14, which is smaller than the through-hole 42, is formed between the rows of the through-holes so as to increase the possibility of insertion of small teeth or canine teeth of the pet. FIG. 4c shows the same constitution as the pet food of FIG. 4b, but is different from FIG. 4b in that a 3×6 row constitution is adopted in FIG. 4c. FIG. 4d is a plan view showing the pet food including through-holes having various sectional shapes, and shows that even through-holes having two or more different sectional shapes may be formed through the body of the food.

In FIG. 5, the sectional shape of the through-hole 42 is a rectangle, and the through-holes are formed in a 2×6 row arrangement. The four protrusion units 43 protrude toward the longitudinal central axis of the through-hole from the inner circumferential surface of each through-hole 42, having a rectangular section, or protrude from the inner circumferential surface so as to form a helical ridge. The sectional shape of the protrusion unit is approximately the same as the leaves of a three-leaf clover. FIG. 5 shows a perspective view in which the constitution of a groove 17 formed in the protrusion unit is partially enlarged so as to easily understand the constitution of the protrusion unit. The protrusion unit may have various other sectional shapes, if necessary, in order to increase the performance of removal of dental calculus and plaque covering the pet's teeth, and the number of grooves 17 may be selected in order to improve the efficiency with which dental calculus and plaque are removed.

A better understanding of the present invention may be obtained through the following examples which are set forth to illustrate, but are not to be construed to limit the present invention.

### Example

5 wt% of chicken meal and 0.3 wt% of a concentrated chicken flavoring agent were added to 40 wt% of tapioca and rice starch, 5 wt% of gelatin, 3 wt% of glycerin, 8 wt% of maltitol, 5 wt% of fructo-oligosaccharides, and 1.5 wt% of soybean oil, purified water was added as a balance so that the total content was 100 wt%, and all of them were mixed, cooked, and subjected to injection molding, thereby obtaining a body 50 (molded article) such as the body of the pet food shown in FIG. 5. The body 50 had the following size. The dimensions of the exterior of the body 50 were 90 X 25 X 25 mm, and the hardness value was 40 A when measured using a durometer.

### Comparative Example 1

The same body as in the Example was used as a typical molded pet food bar, except that through-holes were not formed through the body.

### Comparative Example 2

The same body as in Comparative Example 1 was manufactured using an elastomer material, and the through-holes formed through a portion of the body were filled with the food.

### - Selection of target pet -

Among 60-month-old beagle pet dogs, 30 beagles were selected as pet animals to be tested. The selected pet dogs were observed to have a lot of plaque when subjected to inspection and exploration, performed for the purpose of the intra-oral test evaluation.

### - Test condition -

In order to perform the test evaluation, a total of 30 head of animals to be tested were divided into three groups each including 10 head of animals. A predetermined amount of artificial food was fed to the animals to be tested for four weeks in the morning and at night while the animals were appropriately exercised in the same space, which was well-lighted and well-ventilated. During subsequent testing, the same amount of artificial food was also supplied, and the animals were appropriately exercised.

### - Test and evaluation procedure -

For evaluation, a disclosing solution or tablet test and a modified Snyder test using a Cariostat for a dental caries activity test were performed, and the evaluation procedure was as follows.

### (1) Disclosing solution or tablet test

The animals to be tested were allocated to the Example of the present invention ('first group'), Comparative Example 1 ('second group'), and Comparative Example 2 ('third group'). One pet food was fed to one head of animal in the morning and the afternoon every day for eight weeks, tooth surfaces were discolored using a disclosing agent once every two weeks, and discoloring was repeated four times (two months) to check whether or not bacterial plaque covered the tooth surface and also to check changes in the amount of plaque. The discoloration results were compared using a tooth-surface plaque index measurement method.

### (2) Modified Snyder test using Cariostat

A typical modified Snyder test is performed to check the amount and the activity of acid-forming bacteria in the oral cavity. Based on the fact that bacteria contained in tooth surface plaque or saliva form acids, the degree of activity of the acid-forming bacteria contained in saliva was measured using a colorimetric method.

The narrow surfaces of molar teeth of the upper and lower jaws of the animals to be tested were scraped once every two weeks, and scraping was repeated four times (two months) to collect the tooth surface plaque. The collected tampon was added to a prepared medium, a stopper was put thereon, and the medium was left in an incubator at 37°C for 48 hours to perform culturing, thus comparing and evaluating changes in the color of the medium.

The resultant values that were compared and evaluated according to the aforementioned evaluation procedure were averaged, and the average values are set forth in the following Table.

**[Table 1]**

| State | Example | Comparative Example 1 | Comparative Example 2 |
|---|---|---|---|
| Plaque forming state¹⁾ | Favorable | Normal | Poor |
| Acid-forming bacteria forming state²⁾ | Inactive or slightly active | Normally or slightly active | Highly or normally active |

| | | | |
|---|---|---|---|
| 1) The evaluation standard of the tooth-surface plaque index was as follows: Favorable 0∼1, normal 1∼2, poor 2∼3, and very poor 3∼5 2) The evaluation standard of the acid-forming bacteria is described in the following Table 2. | | | |

**[Table 2]**

| Color | Evaluation | Symbol |
|---|---|---|
| Blue | Inactive | - |
| Green | Slightly active | + |
| Yellow green | Normally active | ++ |
| Yellow | Highly active | +++ |

First, in the case of the test for Comparative Example 2, the body structure included an elastomer as a basic material, and spices were added to the body or the through-holes were filled with foods in order to mask a rubber odor and to increase the palatability, but the animals did not understand that the body was a food source, but merely understood that the body was a toy.

As for the disclosing solution or tablet test and the modified Snyder test using the Cariostat, in the Example, the formed through-holes were slightly smaller than the teeth of the beagle pet dogs in diameter to thus provide high frictional force to the teeth, thereby ensuring excellent plaque removal efficiency using a masticatory action that dogs are readily capable of. However, the flat type of Comparative Example 1 and Comparative Example 2 exhibited low plaque removal efficiency using antimicrobial substances contained in the material of the body, and moreover did not exhibit any plaque removal efficiency using the masticatory action.

Therefore, in order to remove the plaque and perform scaling, it is most preferable for the through-hole formed through the body to be small enough to receive the teeth of the animals slightly tightly and for the surface hardness to be about 15 to 50 A so as to maintain firmness.

The scope of the present invention is defined in the accompanying claims.

### <Description of the Reference Numerals in the Drawings>

10, 20, 30, 40, 50: Pet food
11, 21, 31, 41, 51: Body
12, 22, 32, 42, 52: Through-hole
13, 23, 33, 43, 53: Protrusion unit
14: Small-diameter through-hole
15: Humectant layer
16: Coating layer
17: Groove formed in lateral surface of protrusion unit

## Claims

1. A pet food capable of removing dental calculus and plaque, the pet food comprising:
a bar-type body extending in a longitudinal direction, said body including a plurality of throughholes transversely formed through the body and arranged along a longitudinal direction of the body, wherein each through-hole includes a plurality of protrusion units which protrude toward a longitudinal central axis of the through-hole from the inner circumferential surface of the through-hole, or which protrude from the inner circumferential surface of the through-hole so as to form a helical ridge, such that during a masticatory action of the pet, a tooth trunk of a pet enters a through-hole and comes into contact with an inner circumferential surface of the through-hole and protrusion units contact the outer circumferential surface of the tooth trunk.

2. The pet food of claim 1, wherein a screw thread is longitudinally or transversely formed in the inner circumferential surface of each through-hole.

3. The pet food of claim 1, wherein a screw thread is longitudinally or transversely formed in the inner circumferential surface of each through-hole and in lateral surfaces of the protrusion units extending from the inner circumferential surface.

4. The pet food of claim 1, wherein the protrusion units have a sectional shape of a circle, a polygon, or leaves of a three-leaf clover.

5. The pet food of claim 1, wherein a total sectional area of the upper and lower sides of the through-holes formed through the body 11 is more than 40% of the total surface area of the upper and lower surfaces of the body before the through-holes are formed.

6. The pet food of claim 5 wherein each through-hole has a sectional shape of a circle, a semi-circle, an oval, a polygon, a pentagram, a cogwheel, a dumbbell, or a cloud including two or more circles or ovals that partially overlap.

7. The pet food of claim 1, wherein the body includes a humectant layer disposed beneath the coating layer.

8. The pet food of claim 1, wherein one or more rows of the through-holes are longitudinally and transversely arranged in the body.

9. The pet food of claim 8, wherein said through-holes have a diameter and wherein a small-diameter through-hole, smaller than the diameter of said through-holes, is formed between the rows of the through-holes.

10. A method of manufacturing a pet food, the method comprising:
providing 100 wt% of a mixture including 30 to 70 wt% of a starch, 5 to 30 wt% of a sugar, and a balance of solvent mixed therein;
molding the mixture so that the mixture has a bar-type body wherein a plurality of through-holes is transversely formed through the body and arranged along a longitudinal direction of the body, so that during a masticatory action of the pet a tooth trunk of a pet enters a through-hole and comes into contact with an inner circumferential surface of the through-hole; and
forming protrusion units which protrude from the inner circumferential surface of each through-hole toward a longitudinal central axis of each through-hole, or which protrude from the inner circumferential surface of each through-hole so as to form a helical ridge, so that during a masticatory action of the pet, protusion units contact the outer circumferential surface of the tooth trunk.

11. The method of claim 10, further comprising:
longitudinally or transversely forming a screw thread in the inner circumferential surface of the through-hole.

12. The method of claim 10, further comprising:
applying a coating layer, a humectant layer, or both the coating layer and the humectant layer on the body.

13. The method of claim 10, further comprising:
forming the through-holes having a same sectional shape or two or more different sectional shapes through the body.

14. The method of claim 10, wherein the molding the mixture includes an injection-molding process.

15. The method of claim 10, wherein a coating layer includes a palatability enhancer, an antimicrobial agent, a flavoring agent, or a coloring agent.

## Patentansprüche

1. Ein Haustierfutter, das fähig ist, Zahnstein und Zahnbelag zu entfernen, wobei das Haustierfutter Folgendes beinhaltet:
einen riegelartigen Körper, der sich in einer Längsrichtung erstreckt, wobei der genannte Körper eine Vielzahl von Durchgangslöchern umfasst, die quer durch den Körper hindurch ausgebildet und entlang einer Längsrichtung des Körpers angeordnet sind, wobei jedes Durchgangsloch eine Vielzahl von Vorsprungseinheiten aufweist, die von der inneren Umfangsfläche des Durchgangslochs zu einer zentralen Längsachse des Durchgangslochs hin vorstehen oder die von der inneren Umfangsfläche des Durchgangslochs derart vorstehen, dass sie einen helixförmigen Steg bilden, sodass während einer mastikatorischen Aktion des Haustieres ein Zahnrumpf eines Haustieres in ein Durchgangsloch eintritt und mit einer inneren Umfangsfläche des Durchgangslochs in Kontakt kommt und Vorsprungseinheiten mit der äußeren Umfangsfläche des Zahnrumpfes in Kontakt sind.

2. Haustierfutter gemäß Anspruch 1, wobei in der inneren Umfangsfläche von jedem Durchgangsloch ein Schraubgewinde längs oder quer ausgebildet ist.

3. Haustierfutter gemäß Anspruch 1, wobei in der inneren Umfangsfläche von jedem Durchgangsloch und in seitlichen Flächen der Vorsprungseinheiten, die sich von der inneren Umfangsfläche erstrecken, ein Schraubgewinde längs oder quer ausgebildet ist.

4. Haustierfutter gemäß Anspruch 1, wobei die Vorsprungseinheiten eine Querschnittsform eines Kreises, eines Polygons oder von Blättern eines dreiblättrigen Klees aufweisen.

5. Haustierfutter gemäß Anspruch 1, wobei ein Gesamtquerschnittsbereich der oberen und unteren Seite der Durchgangslöcher, die durch den Körper 11 hindurch ausgebildet sind, mehr als 40 % des Gesamtflächenbereichs der oberen und unteren Fläche des Körpers beträgt, bevor die Durchgangslöcher ausgebildet werden.

6. Haustierfutter gemäß Anspruch 5, wobei jedes Durchgangsloch eine Querschnittsform eines Kreises, eines Halbkreises, eines Ovals, eines Polygons, eines Pentagramms, eines Zahnrads, einer Hantel oder einer Wolke aufweist, einschließlich zwei oder mehreren Kreisen oder ovalen, die sich teilweise überlappen.

7. Haustierfutter gemäß Anspruch 1, wobei der Körper eine Feuchthaltemittelschicht umfasst, die sich unterhalb der Überzugsschicht befindet.

8. Haustierfutter gemäß Anspruch 1, wobei eine oder mehrere Reihen der Durchgangslöcher längs und quer in dem Körper angeordnet sind.

9. Haustierfutter gemäß Anspruch 8, wobei die genannten Durchgangslöcher einen Durchmesser aufweisen und wobei ein Durchgangsloch mit einem kleineren Durchmesser, der kleiner als der Durchmesser der genannten Durchgangslöcher ist, zwischen den Reihen der Durchgangslöcher ausgebildet ist.

10. Ein Verfahren zum Herstellen eines Haustierfutters, wobei das Verfahren Folgendes beinhaltet:
Bereitstellen von 100 Gew.-% einer Mischung, die 30 bis 70 Gew.-% einer Stärke, 5 bis 30 Gew.-% eines Zuckers und einen Rest aus darin gemischtem Lösungsmittel umfasst;
Abformen der Mischung, sodass die Mischung einen riegelartigen Körper aufweist, wobei eine Vielzahl von Durchgangslöchern quer durch den Körper hindurch ausgebildet und entlang einer Längsrichtung des Körpers angeordnet sind, sodass während einer mastikatorischen Aktion des Haustieres ein Zahnrumpf eines Haustieres in ein Durchgangsloch eintritt und mit einer inneren Umfangsfläche des Durchgangslochs in Kontakt kommt; und
Ausbilden von Vorsprungseinheiten, die von der inneren Umfangsfläche des Durchgangslochs zu einer zentralen Längsachse von jedem Durchgangsloch hin vorstellen oder die von der inneren Umfangsfläche von jedem Durchgangsloch derart vorstehen, dass sie einen helixförmigen Steg bilden, sodass während einer mastikatorischen Aktion des Haustieres Vorsprungseinheiten mit der äußeren Umfangsfläche des Zahnrumpfes in Kontakt sind.

11. Verfahren gemäß Anspruch 10, das ferner Folgendes beinhaltet:
längs oder quer Ausbilden eines Schraubgewindes in der inneren Umfangsfläche des Durchgangslochs.

12. Verfahren gemäß Anspruch 10, das ferner Folgendes beinhaltet:
Aufbringen einer Überzugsschicht, einer Feuchthaltemittelschicht oder sowohl der Überzugschicht als auch der Feuchthaltemittelschicht auf den Körper.

13. Verfahren gemäß Anspruch 10, das ferner Folgendes beinhaltet:
Ausbilden der Durchgangslöcher, die eine gleiche Querschnittsform oder zwei oder mehrere unterschiedliche Querschnittsformen aufweisen, durch den Körper hindurch.

14. Verfahren gemäß Anspruch 10, wobei das Abformen der Mischung einen Spritzgussprozess umfasst.

15. Verfahren gemäß Anspruch 10, wobei eine Überzugschicht einen Geschmacksverstärker, einen antimikrobiellen Stoff, einen Aromastoff oder Färbestoff umfasst.

## Revendications

1. Aliment pour animaux de compagnie capable d'éliminer le tartre et la plaque dentaire, l'aliment pour animaux de compagnie comprenant :
un corps en forme de barre s'étendant dans une direction longitudinale, ledit corps comportant une pluralité de trous traversants formés transversalement à travers le corps et agencés le long d'une direction longitudinale du corps, dans lequel chaque trou traversant comprend une pluralité de protubérances qui font saillie vers un l'axe central longitudinal du trou traversant à partir de la surface circonférentielle intérieure du trou traversant, ou qui font saillie à partir de la surface circonférentielle intérieure du trou traversant de manière à former une arête hélicoïdale, de telle sorte que lors d'une action de mastication de l'animal, un tronc de dent d'un animal pénètre dans un trou traversant et vient en contact avec une surface circonférentielle intérieure du trou traversant et les protubérances entrent en contact avec la surface circonférentielle extérieure du tronc de la dent.

2. Aliment pour animaux de compagnie selon la revendication 1, dans lequel un filetage est formé longitudinalement ou transversalement dans la surface circonférentielle intérieure de chaque trou traversant.

3. Aliment pour animaux de compagnie selon la revendication 1, dans lequel un filetage est formé longitudinalement ou transversalement dans la surface circonférentielle intérieure de chaque trou traversant et dans des surfaces latérales des protubérances s'étendant à partir de la surface circonférentielle intérieure.

4. Aliment pour animaux de compagnie selon la revendication 1, dans lequel les protubérances ont une forme en coupe d'un cercle, d'un polygone, ou des feuilles d'un trèfle à trois feuilles.

5. Aliment pour animaux de compagnie selon la revendication 1, dans lequel une aire de section totale des côtés supérieurs et inférieurs des trous traversants formés à travers le corps 11 est supérieure à 40 % de la superficie totale des surfaces supérieure et inférieure du corps avant que les trous traversants soient formés.

6. Aliment pour animaux de compagnie selon la revendication 5, dans lequel chaque trou traversant a une forme en coupe d'un cercle, d'un demi-cercle, d'un ovale, d'un polygone, d'un pentagone, d'une roue dentée, d'un haltère, ou d'un nuage comportant deux cercles ou deux ovales ou plus qui se chevauchent partiellement.

7. Aliment pour animaux de compagnie selon la revendication 1, dans lequel le corps comprend une couche d'humidifiant disposée sous la couche de revêtement.

8. Aliment pour animaux de compagnie selon la revendication 1, dans lequel une ou plusieurs rangées des trous traversants sont agencées longitudinalement et transversalement dans le corps.

9. Aliment pour animaux de compagnie selon la revendication 8, dans lequel lesdits trous traversants ont un diamètre et dans lequel un trou traversant de petit diamètre, plus petit que le diamètre desdits trous traversants, est formé entre les rangées des trous traversants.

10. Procédé de fabrication d'un aliment pour animaux de compagnie, le procédé comprenant de :
fournir 100 % en poids d'un mélange comprenant 30 à 70 % en poids d'un amidon, de 5 à 30 % en poids d'un sucre, et un reste de solvant mélangé à ceux-ci;
mouler le mélange de telle sorte que le mélange ait un corps en forme de barre dans lequel une pluralité de trous traversants sont formés transversalement à travers le corps et agencés le long d'une direction longitudinale du corps, de sorte que lors d'une action de mastication de l'animal, un tronc de dent d'un animal pénètre dans un trou traversant et vient en contact avec une surface circonférentielle intérieure du trou traversant; et
former des protubérances qui font saillie à partir de la surface circonférentielle intérieure de chaque trou traversant vers un axe central longitudinal de chaque trou traversant, ou qui font saillie à partir de la surface circonférentielle intérieure de chaque trou traversant de manière à former une arête hélicoïdale, de sorte que lors une action de mastication de l'animal, les protubérances entrent en contact avec la surface circonférentielle extérieure du tronc de la dent.

11. Procédé selon la revendication 10, comprenant en outre de :
former longitudinalement ou transversalement un filetage dans la surface circonférentielle intérieure du trou traversant.

12. Procédé selon la revendication 10, comprenant en outre de :
appliquer une couche de revêtement, une couche d'humidifiant, ou à la fois la couche de revêtement et la couche d'humidifiant sur le corps.

13. Procédé selon la revendication 10, comprenant en outre de :
former les trous traversants ayant une même forme en coupe ou deux formes en coupe ou plus à travers le corps.

14. Procédé selon la revendication 10, dans lequel le moulage du mélange comprend un procédé de moulage par injection.

15. Procédé selon la revendication 10, dans lequel une couche de revêtement comprend un renforçateur de palatabilité, un agent antimicrobien, un agent aromatisant, ou un agent colorant.
